# EUROPEAN PATENT SPECIFICATION

(11) **EP 0 608 434 B1**
(45) Date of publication and mention of the grant of the patent: **15.12.1999**
(21) Application number: 93919557.4
(22) Date of filing: 19.08.1993
(51) Int. Cl.: B65D 25/28, B65D 5/46, B65D 3/22, B65D 25/14, B29C 45/14

(54) **CONTAINER WITH HANDLES**
BEHÄLTER MIT HENKEL
RECIPIENT A POIGNEES

(30) Priority: 19.08.1992 JP 6392692 U
(43) Date of publication of application: 03.08.1994
(73) Proprietor: Yoshino Kogyosho Co., Ltd., Tokyo 136-8531 (JP)
(72) Inventor: YAMANAKA, Nobuo, Koto-ku, Tokyo 136 (JP)
(74) Representative: Chettle, Adrian John
(86) International application number: PCT/JP93/01161
(87) International publication number: WO 94/04421

(56) References cited:
- JP-A- 58 052 047
- JP-B- 58 037 133
- JP-U- 56 097 216

## Description

### Technical Field

The present invention relates to a container with an ear being made of synthetic resin and a method for manufacturing the same.

### Background Art

In general, a cup-shaped container made of synthetic resin comprises of a bottom part, and a cylindrical drum part provided on the periphery of the bottom part and having an opening at the top surface. As such a container, there are known one having an ear being unified and one having no ear.

The container having an ear is more convenient than the one having no ear since it is easy to bring hot contents, such as coffee. However, in manufacturing, in transportation, or in storing, the container having an ear has the disadvantage in that the ear hinders efficient piling to thereby make the pile bulky.

Particularly, in case of containers whose ear projects outwardly, it is very inconvenient such as when stored, in a pile, them in an automatic vending machine for coffee or the like, and when brought them for a picnic or the like.

It is therefore an object of the present invention to provide a container having an ear and being made of synthetic resin, in which the ear allows to efficiently pile the container without hindering the piling, and a method for manufacturing the same container.

JP 56-097216, upon which the preamble of claim 1 is based, discloses a collapsible container comprising a flattened outer cylindrical member with a flexible bladder or bag carried therein. Foldable handles or ears are provided on the cylindrical member JP 58-052057 and JP 58-037133 describe moulded containers which are without foldable handle means.

According to the present invention there is provided a container having at least one ear, the at least one ear being formed on a drum part of the container at an ear forming region and divided from the drum part by a kerf, the at least one ear being integrally formed and in one piece with the drum part and extendible from the drum part; characterised in that the container comprises:
a bottom part having a periphery;
a drum part, extending upwardly from the periphery of the bottom part to form a container main body; and
a synthetic resin film adhered to the drum part, the synthetic resin film adhering to and covering at least a region of an inner surface of the drum part corresponding to the ear forming region (8) and the kerf in a liquid-tight manner.

Explanatory variation according to the present invention is described as follows;

First, the ear can stand up easily by providing a thin folding line on the boundary between the ear and the drum parts.

Also, the container can be structured so that the bottom and the drum parts are molded unitedly, the ear is formed on the drum part by providing the kerf thereon, and the synthetic resin film is covered over the ear and kerf parts and is adhered to the inside of the drum part liquid-tightly.

Next, the container can be structured so that the bottom and the drum parts are formed unitedly, the ear is formed on the drum part by providing the kerf thereon, and the synthetic resin film of cylindrical shape, which has openings at its top and bottom and covers all over the inner surface of the drum part, is adhered to the inner surface of the drum part. In this case, however, the film is not adhered to the ear.

Further, the container can be structured so that the bottom and the drum parts are formed unitedly, the ear is formed on the drum part by providing the kerf thereon, and the synthetic resin film of cylindrical shape, which has a bottom and an opening at its top and covers all over the inner surface of the drum part and the inner surface of the bottom part, is adhered to the inner surface of the drum.

Further, the container can be molded in a good design by printing a pattern on the periphery of the synthetic resin film cylindrically-shaped and adhering the film to the inner surface of the cylindrical drum part which is transparent. In this case, the film can be formed as multi-layered films and a printed layer can be provided as the intermediate layer of the multi-layered films to form a pattern.

Molding process for the container according to the present invention is described as follows:

First, a die having a cavity for molding the drum part are provided. This die is designed to mold the kerf and the ear simultaneously with the molding of the drum part. The cavity can be also designed to mold the bottom part unitedly with the drum part.

A synthetic resin film is set by inserting in such a die in advance. The film is cut in such a size covering the ear and the kerf and is then set at the part of the die corresponding to the ear, or the film, after cylindrically shaped either with a bottom or without a bottom so as to cover all over the inner surface of the drum part, is set in the die.

In this case, a release agent is previously coated on the synthetic resin corresponding to the ear-forming part. Alternatively, an ink containing a release agent may be used. In addition, instead of using a release agent, a resin film having no affinity with the drum forming resin may be intervened between the synthetic resin film corresponding to the ear part and the drum part.

A molten resin is injected from a blender of the resin into the die, in which such a synthetic resin film is set, by an injection molding method, whereby the film is molded in the state of adhering to the inner surface of the drum part. In addition, since the release agent or the film having no affinity with the resin constituting the ear part is intervened previously between the synthetic resin film of the ear forming part and the drum part, the ear does not to adhere to the drum part but can stand up therefrom.

Instead of the manufacturing process described above, the synthetic film may be simply welded to the kerf perimeter of the inner surface of the drum part by a heat-seal process.

### Brief Description of the Drawings

Fig. 1 is an exploded cross view showing a first embodiment of the present invention;

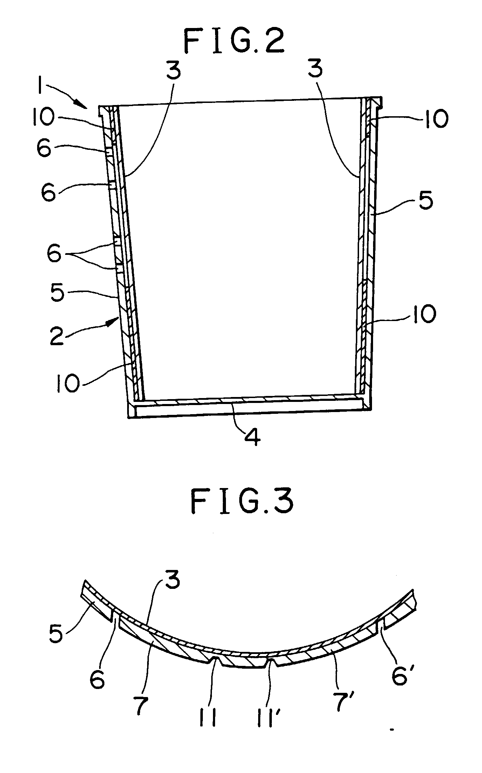

Fig. 2 is a longitudinal sectional view of the first embodiment;
Fig. 3 is a sectional view of A-A illustrated in Fig. 1;
Fig. 4 is a sectional view of a container molding die of the present invention;
Fig. 5 is a process drawing showing a molding method for a container according to the present invention;
Fig. 6 is a process drawing showing a molding method for the container according to the present invention;
Fig. 7 is a process drawing showing a molding method for the container according to the present invention;
Fig. 8 is a process drawing showing a molding method for the container according to the present invention;
Fig. 9 is a longitudinal sectional view showing a second embodiment of the present invention; Fig. 10 is a longitudinal sectional view showing a third embodiment of the present invention;
Fig. 11 is a process drawing showing a molding method for the second and the third embodiments according to the present invention;
Fig. 12 is a sectional view showing a thermo-form method for molding a synthetic resin film into a cylindrical and bottomed shape, that is used in the second and the third embodiments of the present invention;
Fig. 13 is an exploded cross view showing a fourth embodiment of the present invention;
Fig. 14 is a perspective view showing a fifth embodiment of the present invention;
Fig. 15 is a perspective view showing a cylindrical synthetic resin film that is used in the fifth embodiment;
Fig. 16 is an exploded cross view showing a sixth embodiment of the present invention;
Fig. 17 is views showing various examples of thin folding lines of the ears according to the present invention: and
Fig. 18 is an exploded cross view showing one of various examples according to the sixth embodiment of the present invention.

### Best Mode for Carrying out the Invention

### [First Embodiment]

The present invention will now be described in detail with reference to the preferred embodiments thereof, taken in connection with the accompanying drawings.

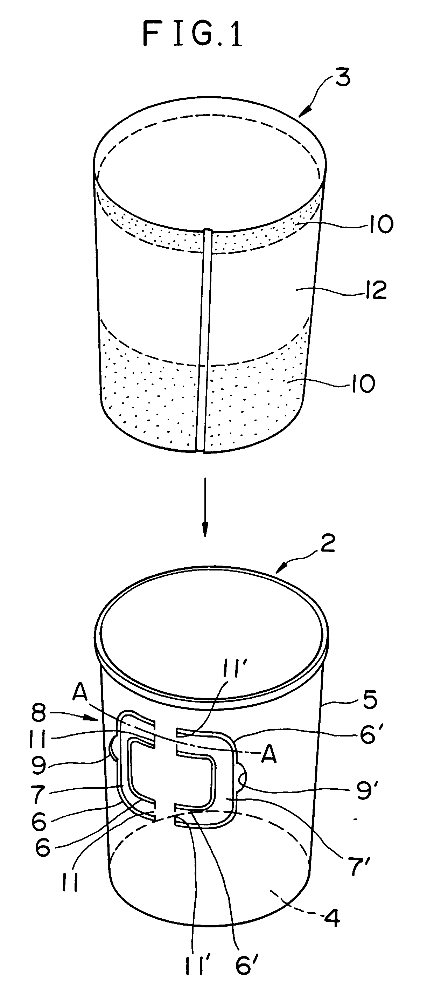

In this embodiment, a container 1 includes a container main body 2 and a synthetic resin film 3 covering over the inner surface of the container main body 2, as shown in Fig. 1.

The container main body 2 includes a circular bottom part 4 and a cylindrical drum part 5 standing up from the peripheral edge of the bottom part 4 to form an opening on the top of the drum part 5.

Further, ears 7 and 7' are divided and formed by grooving kerfs 6 and 6' in the rear surface of the drum part 5. The ear 7 provides the two kerfs 6 and 6 being parallel each other and C-shaped while one is larger than the other, and the two kerfs 6' and 6' being reverse of C-shape while one is larger than the other and being provided horizontally symmetry to said kerfs 6 and 6 so that a pair of the ears 7 and 7', the former ear figuring C-shaped band and the latter ear figuring a band horizontally symmetrical to the former band, is divided and formed. There is provided a pair of semicircle-shaped notches 9 and 9' at a longitudinal center part of the outside of the kerfs 6 and 6', respectively. The notches 9 and 9' are provided so as to insert fingers to thereby stand up the pair of ears 7 and 7' more easily.

There are provided thin folding lines 11 and 11' on each of the base part of the ears 7 and 7'. These thin folding lines 11 and 11' are provided at a position that links each ends of the C-shaped kerfs 6 and 6 or the kerfs 6' and 6'.

The synthetic resin film 3 is adhered to the inner surface of the drum part 5 of the container main body while it covers over an ear forming part 8 including the ears 7 and 7', the kerfs 6 and 6' and the notches 9 and 9' liquid-tightly. Consequently, it is impossible for liquid contents to leak from the container main body through the kerf 6 or 6'. Moreover, the inner surface of the film is not adhered to either the inner surface of the ear 7 or that of the ear 7' in the region of the ear forming part 8, so that the ears 7 and 7' can stand up.

In Fig. 1, an adhesive layer 10 is coated onto the outer circumference of the top end part and the outer circumference of the lower part of the cylindrical synthetic resin film 3, while a non-adhesive part 12 is provided between the two adhesive layers 10 and 10. When the cylindrical synthetic resin film 3 is loaded onto the inside of the drum part 5, the synthetic resin film 3 adheres to the inner surface of the drum part 5 by the adhesive layers 10 and 10. Nevertheless, the non-adhesive region 12 corresponds to the ear forming part 8 so that each of the ears 7 and 7' does not adhere to the synthetic resin film 3.

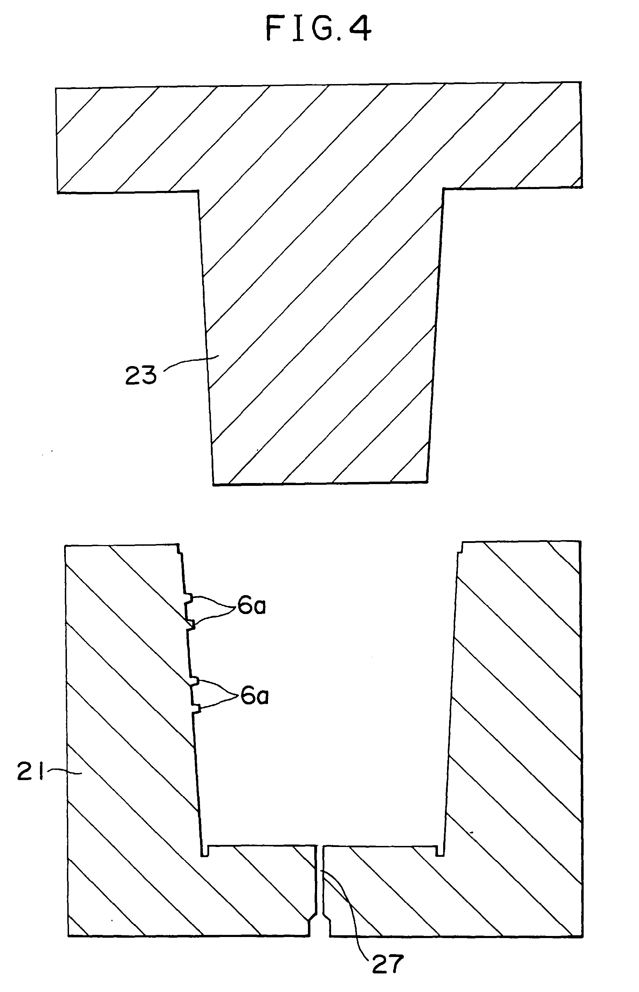

Next, an example of manufacturing methods for the container according to this first embodiment will be explained below with reference to Figs. 4 to 8.

The method explained hereinafter uses a so-called insertion molding process.

First, a die illustrated in Fig. 4 is provided. The die includes a female mold 21 of which inner surface models an outline shape of the container and a male mold 23 which is inserted into the female mold 21. These male mold 23 and female mold 21 are fitted to close so that a container molding cavity 25 is formed therebetween as shown in Fig. 6. Moreover, a gate 27 for supplying a molten resin into the cavity 25 is provided in the female mold 21. Projections 6a are also provided on the inner wall face of the female mold 21 in order to form the kerfs 6 and 6'.

While, a cylindrical synthetic resin film as shown in Fig. 1 is provided. This cylindrical synthetic resin film can be molded cylindrically such as by the steps of rolling a flat film cylindrically, superimposing both ends thereof, and then adhering these ends by means of heat-sealing or the like and by the step of extruding a molten resin from an extrusion die having a circular extruding port.

The periphery of the cylindrical synthetic resin film is coated with an adhesive layer in advance as shown in Fig. 1.

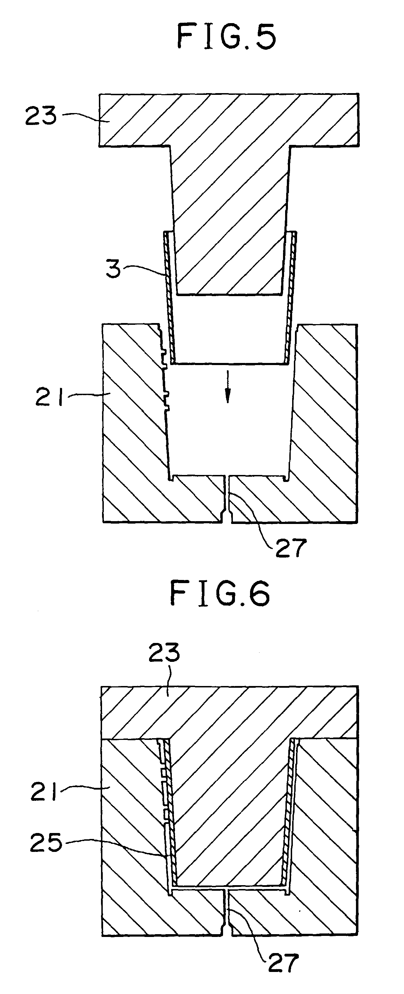

Next, the male mold 23 and the female mold 21 are first opened and then the cylindrical synthetic resin film provided previously is loaded into the female mold 21 or loaded onto the periphery of the male mold 23 as shown in Fig. 5.

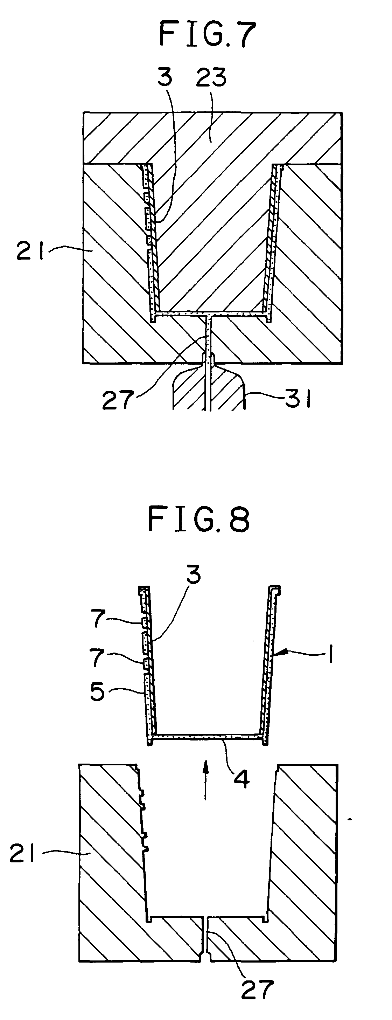

Thereafter, the male mold 23 and the female mold 21 are closed as shown in Fig. 6 and the molten resin is extruded into the cavity 25 through a nozzle 31 of an injection molding machine as shown in Fig. 7.

After the resulting molded product was cooled, the die is opened to take out the molded product or a molded container as shown in Fig. 8.

In this embodiment, the material of the container main body 2 is polypropylene, that of the synthetic resin film 3 is polyethylene terephthalate which is different from the material of the container main body 2 and has no affinity with polypropylene, and that of the adhesive layer 10 is polypropylene, respectively.

When the container main body 2 is injection-molded, the adhesive resin layer 10 will melt so as to unify the synthetic resin film 3 with the same container main body.

According to this embodiment, the synthetic resin film has an advantage that the position of the same can be registered easily when being fixed.

Further, in this embodiment, when the synthetic resin film 3 consists of an adhesive synthetic resin having an affinity with the resin of the drum part 5, such a container having the same function as described in this embodiment can be constituted by coating a release agent onto the region 12 corresponding to the ear forming part 8, while the above-described adhesive layer 10 is not required.

### [Second Embodiment]

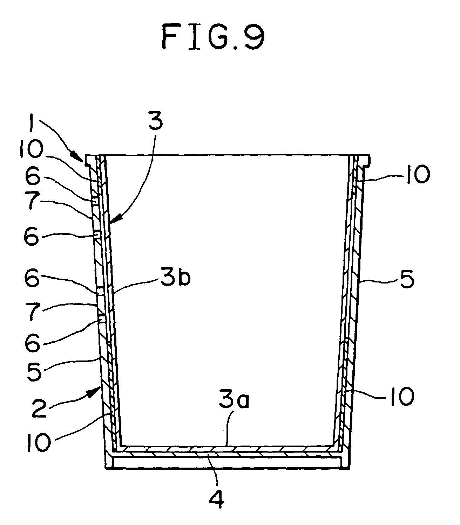

Next, a second embodiment according to the present invention will be explained with reference to Figs. 9, 11 and 12.

In this embodiment, the synthetic resin film loaded into the container main body 2 was molded so as to be cylindrical and have a bottom. That is, the synthetic resin film 3 includes a circular bottom part film 3a and a drum part film 3b standing up from the periphery of the bottom part film 3a. The bottom part film 3a is loaded onto the inner surface of the bottom part of the container main body 2 while the drum part film 3b is loaded onto the inner surface of the drum part of the same container main body 2.

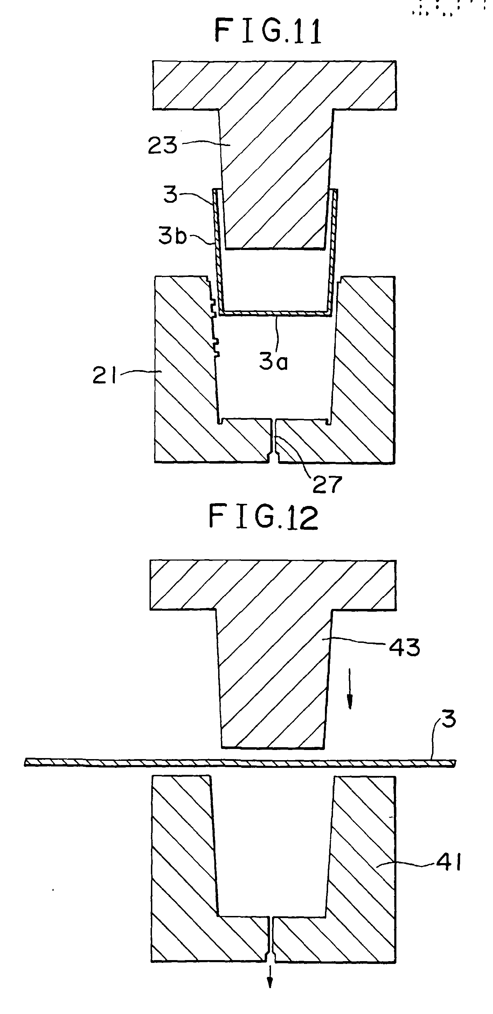

Such a synthetic resin film 3 cylindrical and bottomed in shape is molded by means of a so-called thermo-form method. That is, as shown in Fig. 12, a thermo-form molding die having a female mold 41 for use in forming a concave part having such a figure as a cylindrical bottomed container and a male mold 43 for use in forming a convex part of the same. Then, a flat pre-heated synthetic resin film is laied onto the top surface of the female mold 41 and the male mold is fitted to the female mold while the film is pressed thereon by the male mold. In this case, the inside of the female mold is negatively pressurized by an air-suction through a suction path 44 being provided with the female mold 41, which pressure allows the film to adhere onto the inner surface of the die, or a compression air is supplied to the top surface of the film through a compression air path not shown being provided with the male mold 43. Thus, the film forming body which is cylindrical and bottomed in shape is made up to be loaded into the container molding die as shown in Fig. 11 so that a container illustrated in Fig. 9 is molded by the same process as explained in Figs. 5 to 8 in the first embodiment.

As long as such a synthetic resin film being cylindrical and bottomed in shape is used, leaking of liquid can be avoided regardless of the liquid-tight function in the part of the kerfs 6.

### [Third Embodiment]

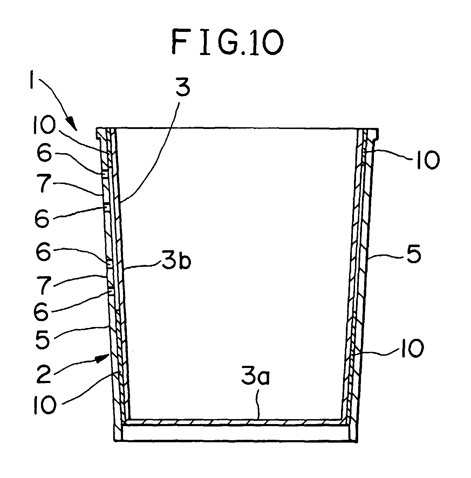

Further, third embodiment of the present invention will be explained with reference to Figs. 10, 11 and 12.

The container of this embodiment has the same structure as in Fig. 9 except that a bottom part 4 of the container main body is deleted. In order to obtain a function to contain a content, the bottom part film 3a of a synthetic resin film is also used as a bottom part of a container.

Because the other aspects are the same as that of the second embodiment, further explanations will be omitted.

### [Fourth Embodiment]

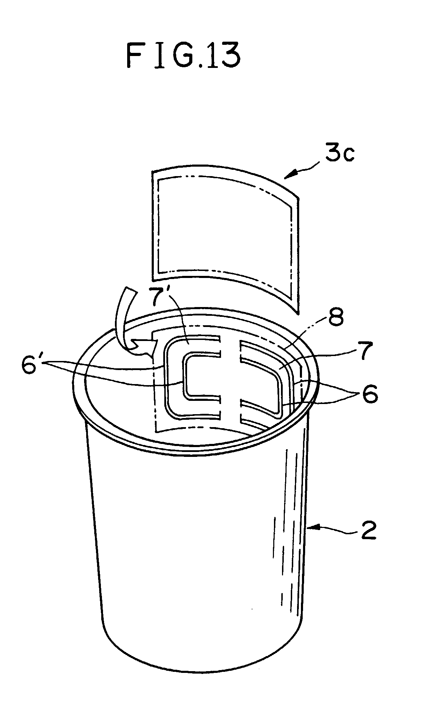

A fourth embodiment of the present invention will be described with reference to Fig. 13.

In this embodiment, there is used a synthetic resin film whose size is minimum , that is, a film 3c having a size to cover partially the ear forming part 8 as shown in Fig. 13.

In this case, the surrounding part of the film 3b is adhered to the outside of the kerfs 6 and 6' of the inner surface of the drum part 5 of the container main body 2.

In this embodiment, methods for adhering the film can be also carried out not only by melt-adhering the adhesive layer in accordance with said insertion molding process, but also by heat-sealing or ultrasonic-welding the surrounding part of the film to the drum part 5 or by using an adhesive.

In this embodiment, the manufacturing cost can be reduced because only a flat film is used without molding the film into cylindrical shape or cylindrical and bottomed shape as explained in the above embodiments.

### [Fifth Embodiment]

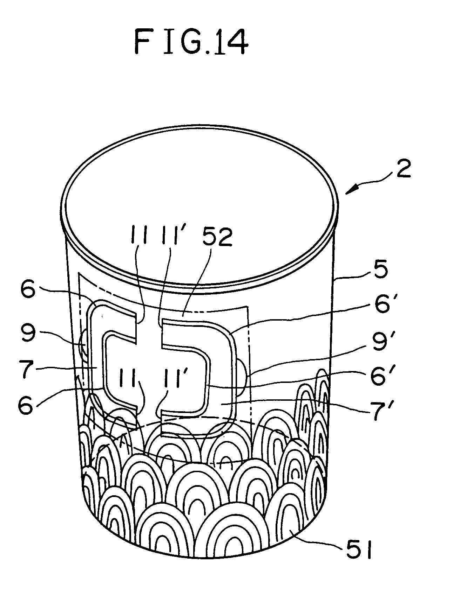

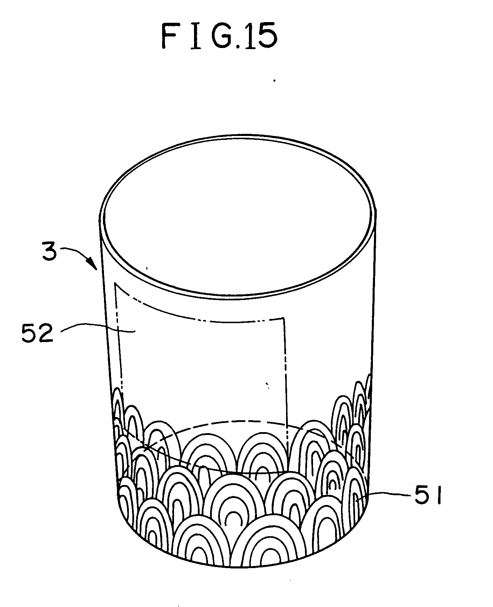

A fifth embodiment will be described with reference to Figs. 14 and 15.

In this embodiment, the container main body 2 and the cylindrical synthetic resin film being loaded into the container main body are provided.

The container main body 2 is made of a transparent synthetic resin, for example, polypropylene.

The synthetic resin film 3 being loaded into the container main body is formed by laminating a inner layer film, an intermediate layer film and an outer layer film, which are transparent, and on the center layer a desired pattern 51 is previously formed by printing.

Moreover, as the outer layer film of the synthetic resin film 3 , there is used a resin having an affinity with that of the container main body 2, in which the resin used is a resin having the same property as that of the container body. i.e., polypropylene. Other olefinic resins may also be used.

Also, an ink 52 containing a release agent is printed on the region which corresponds to the ear forming part 8 on the outer surface near the top part of the outer layer film as shown in Fig. 15.

Because other aspects are the same as that of the first embodiment except the adhesive layer 10 being not formed by coating, further explanation will be omitted while same reference numerals are denoted.

A method for molding the container according to this embodiment is the insertion molding method explained in the first embodiment. In this case, since the outer layer film is made of polypropylene, it will be adhered to an injected molten resin so as to unify with the drum part 5.

At this time, since the ears 7 and 7' is formed at the position that corresponds to the region wherein the ink 52 containing a release agent is printed on the surface of the outer layer of the film 3, the ears 7 and 7' does not adhere to the same film.

When the container with an ear is in use, a pair of the C-shaped ears 7 and 7' is raised up by fingertips through a concave 9 at each of a cardinal point of the thin folding lines 11 and 11' to project them outwardly from the drum part 5 so that the same ears are unified into one ear body.

In this case, since each of the ears 7 and 7' corresponds to the surface printed with the ink 52 containing a release agent, they do not adhere to the film 3 so that they can be raised up and projected outwardly with ease.

Also, since the pattern 51 is printed beforehand on the synthetic resin film 3, the container main body 2 can be easily patterned by using an injection resin made of the transparent material for molding.

Further, the synthetic resin film 3 is not required to be formed of three layers as explained in this embodiment, but it can be formed by the steps of printing a pattern on a part of an outer surface of one layer film, coating an ink 52 containing a release agent on a region corresponding to the ear forming part 8, and then coating an adhesive layer as explained in the first embodiment on the other part of the outer surface.

The synthetic resin film 3 may be formed of two layers consisting of an inner and an outer layers in which a pattern is printed on the outer surface of the inner layer or on the inner surface of the outer layer so as to be positioned between these two layers.

In addition, the synthetic resin film having a cylindrical and bottomed shape as described in the second and the third embodiments can be used in this fifth embodiment.

In this embodiment, when the outer film is formed of a resin having no affinity with that of the container main body 2, it is possible not to coat an ink 52 containing a release agent over the face corresponding to the ear forming part 8 but to coat and form the adhesive layer 10 according to the first embodiment on the other part.

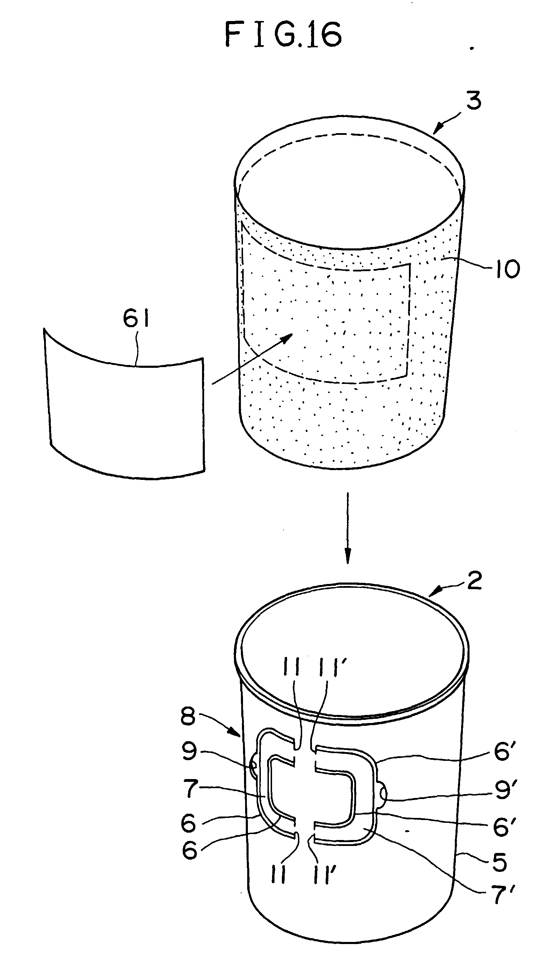

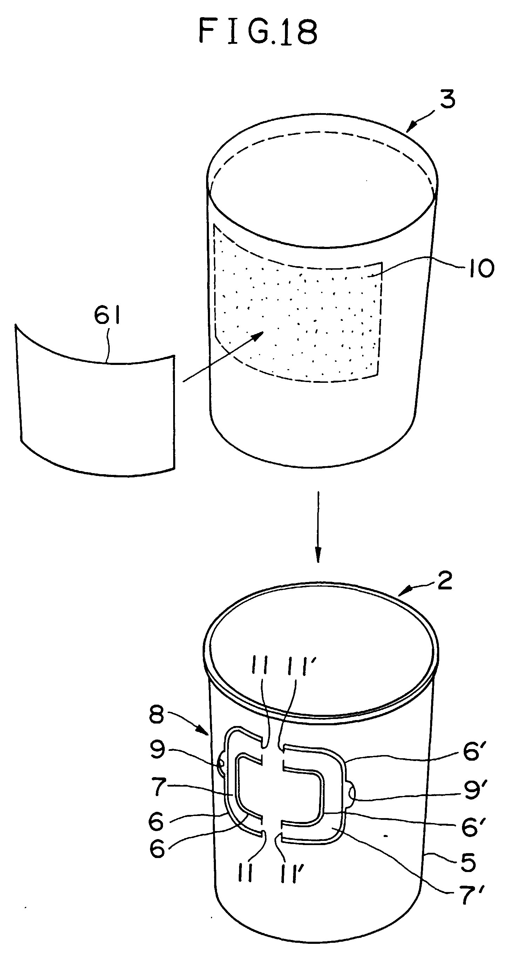

In this embodiment, further, an intervention film 61 made of non-adhesive resin having no affinity with the resin of the drum part may be used as shown in the Figs. 16 and 18 instead of using an ink containing a release agent.

### [Sixth Embodiment]

A sixth embodiment will be explained with reference to Fig. 16.

The embodiment shown in Fig. 16 has the following constitution in addition to the first embodiment,:

An adhesive layer is coated and formed all over the outer surface of the cylindrical synthetic resin film 3. The intervention film 61 made of non-adhesive resin having no affinity with the resin of the container main body 2 is adhered to the region corresponding to the ear forming part 8 on the outer surface of the synthetic resin film 3.

A container having the intervention film 61 between the ears 7 and 7' and the synthetic resin film 3 is molded by insert-molding such a synthetic resin film 3 having the intervention film in accordance with the same molding method as the embodiment.

In this case, since the ears 7 and 7' correspond to the intervention film 61 made of the resin having no affinity with the resin forming the container main body, the ears can be detached from the intervention film 61 so as to be raised up and projected outwardly with ease.

This embodiment is also applicable to the second and the third embodiments.

Moreover, according to this embodiment, the adhesive layer 10 can be omitted at the region except the intervention film adhering part as shown in Fig. 18 by making up the synthetic resin film 3 of the adhesive synthetic resin having an affinity with the resin forming the drum part.

### [Other Embodiments]

Various modification examples according to the present invention can be realized as follows.

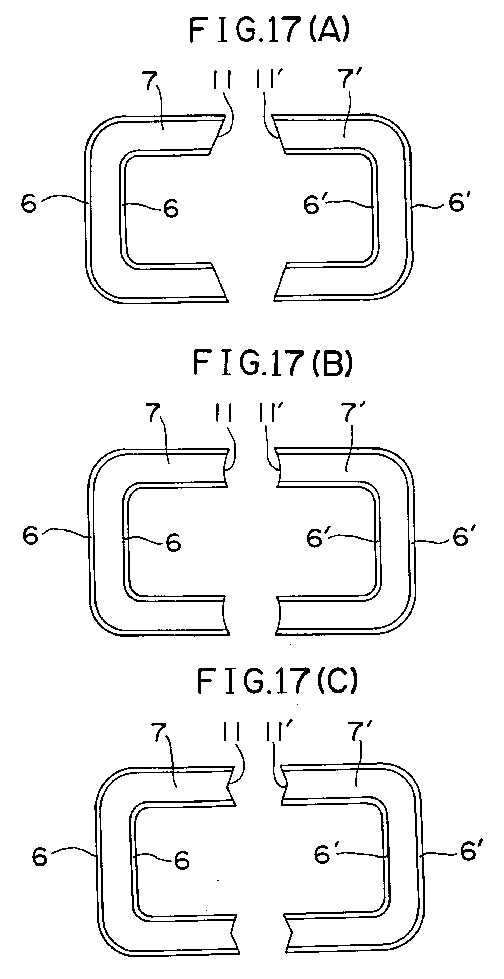

It is possible for the ears 7 and 7' to turn over in order not to return to the original position when the same ears stand up and cross a fixed dead point such as by inclining the thin folding lines 11 and 11' to the center axis of the container drum part as shown in Fig. 17(A), by forming the same lines in a circular arc shape as shown in Fig. 17(B), and by forming the interior angle of the same lines in a triangular obtuse angle as shown in Fig. 17(C). Consequently, the ears do not return to the drum part side if the hand let them off so that it is easy to re-hold them again.

In the above embodiments, a pair of ears 7 is provided horizontal-symmetrically, however, it can be provided vertical-symmetrically, further, it is also possible to provide only one ear. The pair of ears 7 can be not only divided and formed at the double C-shaped kerfs 6 as mentioned above but also divided and formed at the inside of one of the C-shaped kerfs.

Further, it is possible to use any thermoplastic resins as the synthetic resin material to make up the container main body or the synthetic resin film according to the present invention. It is also possible to use a foaming resin to make up the container main body.

### Industrial Applicability

As described above, the container according to the above embodiments can be piled efficiently and is not bulky in manufacturing, in transportation, or in storing since the ears are formed as a part of the drum part of the container main body without projecting outwardly when not in use. In addition, since the ears and the container main body are molded into a unity, the manufacturing cost is advantageous.

The container having the ears according to the present invention can be used in a simple manner such as raising up the ears outwardly so that it is very handy, easy and convenient to use.

The containers of this kind can also be used as a container for instant noodles, for an instant coffee or for any kind of drinks, further, the containers can be piled and stored in an automatic vending machine. It is also very useful for a disposable container for a picnic.

## Claims

1. A container comprising an inner film portion and (1) having at least one ear (7,7'), the at least one ear (7,7') being formed on a drum part (5) of the container at an ear forming region (8) and divided from the drum part (5) by a kerf (6,6'), the at least one ear (7,7') being integrally formed and in one piece with the drum part (5) and extendible from the drum part (5); characterised in that the container comprises a bottom part (4) having a periphery the drum part (5) extending upwardly from the periphery of the bottom part (4) to form a container main body (2); and
a synthetic resin film (3) adhered to the drum part (5), the synthetic resin film (3) adhering to and covering at least a region of an inner surface of the drum part (5) corresponding to the ear forming region (8) and the kerf (6,6') in a liquid-tight manner.

2. The container (1) according to claim 1, including a thin folding line (11,11') formed at a boundary between the at least one ear (7,7') and the drum part (5).

3. The container (1) according to claim 2, wherein the thin folding line (11,11') inclines to a center axis of the drum part (5).

4. The container (1) according to claim 2, wherein the thin folding line (11,11') is essentially in the shape of a circular arc.

5. The container (1) according to claim 2, wherein the thin folding line (11,11') is formed by two sides of a triangle, wherein an interior angle formed by the two sides is an obtuse angle.

6. A container (1) according to any preceding claim, wherein the bottom part (4) and the drum part (5) are integrally moulded in one piece to form the container main body (2).

7. The container (1) according to claim 6, wherein said synthetic resin film (3) is a cylindrical film, the cylindrical film covering the inner surface of the drum part (5), the synthetic resin film (3) including a bottom and a top having an opening at the top.

8. The container (1) according to claim 6, wherein the synthetic resin film (3) includes a bottom part film (3a), covering an inner surface of the bottom part (4) and a drum part film (3b) extending from a periphery of the bottom part film (3a) to cover the inner surface of the drum part (5).

9. The container (1) according to any preceding claim, wherein a pattern (51) is printed on the periphery of the synthetic resin film (3), and said drum part (5) is formed from a transparent synthetic resin.

10. The container (1) according to claim 9, wherein the synthetic resin film (3) is a multi-layered film, the multi-layered film includes at least an outer layer and an inner layer and further includes the pattern (51) between the outer layer and the inner layer.

11. The container (1) according to claim 10, wherein the multi-layered film includes at least three layered films and the pattern (51) is printed on an intermediate layer of film of the at least three layered films.

12. The container (1) according to claim 10 or claim 11, wherein the outer layer film of the synthetic resin film (3) is formed from a synthetic resin having no affinity with the resin forming the drum part (5), the outer layer of film includes an adhesive layer (10) except at a part corresponding to the ear forming region (8) so the adhesive layer (10) can adhere the outer layer film to the kerf (6,6') in a liquid-tight manner.

13. The container (1) according to claim 10 or claim 11, including a release agent coated on a part of the outer layer of film corresponding to the ear forming region (8), wherein the outer layer of film of the synthetic resin film (3) is formed from a synthetic resin having an affinity with the resin constituting the drum part (5).

14. The container (1) according to claim 10 or claim 11, including an intervention film (61) formed from a resin having no affinity with the resin forming the drum part (5), wherein the outer layer film of the synthetic resin film is formed from a synthetic resin having an affinity with the resin forming the drum part (5), and the intervention film (61) is adhered to a part of the outer layer film corresponding to the ear forming region (8).

15. The container (1) according to claim 10 or claim 11, including an adhesive layer (10) able to adhere to the drum part (5) and an intervention film (61) formed from a resin having no affinity with the resin forming the drum part (5), wherein the adhesive layer (10) is formed on the outer surface of the outer layer of film of the synthetic resin film (3), and the intervention film (61) is adhered to a part of the outer layer film corresponding to the ear forming region (8).

16. The container (1) according to any of claims 1 to 9, wherein the synthetic resin film (3) is formed from a resin having no affinity with a resin forming the drum part (5), the synthetic resin film (3) having an adhesive layer (10) except at a part of the synthetic resin film (3) corresponding to the ear forming region (8) such that the adhesive layer (10) adheres the synthetic resin film (3) to the kerf (6,6') in a liquid-tight manner.

17. The container (1) according to any of claims 1 to 9, including a release agent coated on a part of the resin film corresponding to the ear forming region (8), wherein the synthetic resin film (3) is formed from a synthetic resin having an affinity with a resin forming the drum part (5).

18. The container (1) according to any of claims 1 to 9, including an intervention film (61) formed from a resin having no affinity with a resin forming the drum part (5), wherein the synthetic resin film (3) is formed from a synthetic resin having an affinity with the resin forming the drum part (5), and the intervention film (61) adheres to a part of the synthetic resin film corresponding to the ear forming region (8).

19. The container (1) according to any of claims 1 to 9, including an intervention film (61) formed from a resin having no affinity with a resin forming the drum part (5) and an adhesive layer (10) able to adhere to the drum part (5), wherein the adhesive layer (10) is formed on the outer surface of the synthetic resin film (3), and the intervention film (61) adheres to a part of the synthetic resin film (3) corresponding to the ear forming region (8).

20. The container (1) according to any of claims 1 to 9, wherein the synthetic resin film (3) adheres to and covers the entire inner surface of the drum part (5) corresponding to the ear forming region (8) and kerf (6,6') in a liquid-tight manner.

## Patentansprüche

1. Behälter (1), der einen inneren Filmabschnitt und zumindest einen Henkel (7, 7') aufweist, wobei der zumindest eine Henkel (7, 7') an einem zylinderförmigen Abschnitt (5) an dem Behälter in einem Henkelbildungsabschnitt (8) ausgebildet und von dem zylinderförmigen Abschnitt (5) durch einen Einschnitt (6, 6') getrennt ist, der zumindest eine Henkel (7, 7') ist integriert geformt und in einem Teil ausgebildet mit dem zylinderförmigen Abschnitt (5) und von dem zylinderförmigen Abschnitt (5) abhebbar, **dadurch gekennzeichnet**, daß der Behälter versehen ist mit einem unteren Abschnitt (4) mit einer Peripherie, dem zylinderförmigen Abschnitt (5), der sich von der Peripherie des unteren Abschnitts (4) nach oben erstreckt, um einen Hauptkörper (2) des Behälters zu bilden, und einem an dem zylinderförmigen Abschnitt (5) haftenden Kunststoffilm (3), der an zumindest einem Bereich einer inneren Oberfläche des zylinderförmigen Abschnitts (5), welcher dem Henkelbildungsabschnitt (8) und dem Einschnitt (6, 6') entspricht, haftet und flüssigkeitsdicht abdeckt.

2. Behälter (1) gemäß Anspruch 1 mit einer dünnen Faltlinie (11, 11'), die an dem Übergang zwischen dem zumindest einen Henkel (7, 7') und dem zylinderförmigen Abschnitt (5) ausgebildet ist.

3. Behälter (1) gemäß Anspruch 2, wobei die dünne Faltlinie (11, 11') in Richtung der Mittelachse des zylinderförmigen Abschnitts (5) geneigt ist.

4. Behälter (1) gemäß Anspruch 2, wobei die dünne Faltlinie (11, 11') im wesentlichen die Gestalt eines Kreisbogens aufweist.

5. Behälter (1) gemäß Anspruch 2, wobei die dünne Faltlinie (11, 11') durch zwei Seiten eines Dreiecks geformt ist, wobei der zwischen den Seiten eingeschlossene Winkel stumpf ist.

6. Behälter (1) nach einem der vorhergehenden Ansprüche, wobei der untere Abschnitt (4) und der zylinderförmige Abschnitt (5) integral einteilig geformt sind, um den Hauptkörper (2) des Behälters zu bilden.

7. Behälter (1) gemäß Anspruch 6, wobei der Kunststoffilm (3) ein zylindrischer Film ist, der zylindrische Film die innere Oberfläche des zylinderförmigen Abschnitts (5) abdeckt, der Kunststoffilm ein unteres Ende und ein oberes Ende mit einer Öffnung am oberen Ende aufweist.

8. Behälter (1) gemäß Anspruch 6, wobei der Kunststoffilm einen unteren Filmabschnitt (3a) aufweist, der eine innere Oberfläche des unteren Abschnitts (4) abdeckt, und einen Zylinder-Filmabschnitt (3b) aufweist, der sich von der Peripherie des unteren Filmabschnitts (3a) erstreckt, um die innere Fläche des zylinderförmigen Abschnitts (5) abzudecken.

9. Behälter (1) gemäß einem der vorhergehenden Ansprüche, wobei ein Muster (51) auf die Peripherie des Kunststofffilms (3) gedruckt ist und der zylinderförmige Abschnitt (5) aus einem durchsichtigen Kunststoff besteht.

10. Behälter (1) gemäß Anspruch 9, wobei der Kunststoffilm (3) einen vielschichtigen Film mit zumindest einer äußeren und einer inneren Schicht aufweist und zudem das Muster (51) zwischen der äußeren und der inneren Schicht angeordnet ist.

11. Behälter (1) gemaß Anspruch 10, wobei der vielschichtige Film einen zumindest dreischichtigen Film aufweist und das Muster (51) auf einem dazwischenliegenden Film des zumindest dreilagigen Films angeordnet ist.

12. Behälter (1) gemäß Anspruch 10 oder 11, wobei der äußere Film des Kunststoffilms (3) aus einem Kunststoff gefertigt ist, der keine Affinität zu dem den zylinderförmigen Abschnitt (5) bildenden Kunststoff aufweist, die äußere Filmschicht versehen ist mit einer Haftschicht (10) außer in dem Bereich, welche dem Henkelbildungsabschnitt (8) entspricht, so daß die Haftschicht (10) die äußere Schicht mit dem Einschnitt (6, 6') flüssigkeitsdicht verbindet.

13. Behälter (1) gemäß Anspruch 10 oder 11 mit einem auf einen Abschnitt der äußeren Schicht des Films, der dem Henkelbildungsabschnitt (8) entspricht, aufgebrachten Trennmittel, wobei die äußere Schicht des Kunststoffilms (3) aus einem Kunststoff gefertigt ist, der eine Affinität zu dem den zylinderförmigen Abschnitt (5) bildenden Kunststoff aufweist.

14. Behälter (1) gemäß Anspruch 10 oder 11 mit einem dazwischenliegenden Film (61), der aus einem Kunststoff gebildet ist, der keine Affinität zu dem den zylinderförmigen Abschnitt (5) bildenden Kunststoff aufweist, wobei die äußere Filmschicht des Kunststoffilms aus einem Kunststoff gefertigt ist, der eine Affinität zu dem Kunststoff aufweist, der den zylinderförmigen Abschnitt (5) bildet, und der dazwischenliegende Film (61) verbunden ist mit einem Abschnitt der äußeren Filmschicht, der dem Henkelbildungsabschnitt (8) entspricht.

15. Behälter (1) gemäß Anspruch 10 oder 11 mit einer Haftschicht (10), die an dem zylinderförmigen Abschnitt (5) haften kann, und einem dazwischenliegenden Film (61), der aus einem Kunststoff gefertigt ist, der keine Affinität zu dem Kunststoff aufweist, aus dem der zylinderförmige Abschnitt (5) gebildet ist, wobei die Haftschicht (10) auf der äußeren Oberfläche der äußeren Filmschicht des Kunststoffilms (3) angeordnet ist, und der dazwischenliegende Film (61) verbunden ist mit einem Abschnitt der äußeren Filmschicht, die dem Henkelbildungsabschnitt (8) entspricht.

16. Behälter (1) gemäß einem der Ansprüche 1 bis 9, wobei der Kunststoffilm (3) einen Kunststoff aufweist, der keine Affinität zu dem den zylindrischen Abschnitt (5) bildenden Kunststoff aufweist, der Kunststoffilm (3) eine Haftschicht (10) außer in dem Abschnitt des Kunststoffilms (3) aufweist, der dem Henkelbildungsabschnitt (8) entspricht, so daß die Haftschicht (10) den Kunststoffilm (3) mit dem Einschnitt (6, 6') flüssigkeitsdicht verbindet.

17. Behälter (1) gemäß einem der Ansprüche 1 bis 9 mit einem Trennmittel, das auf einen Abschnitt des Kunststoffilms aufgetragen ist, der dem Henkelbildungsabschnitt (8) entspricht, wobei der Kunststoffilm (3) aus einem Kunststoff besteht, der eine Affinität zu dem Kunststoff aufweist, der den zylinderförmigen Abschnitt (5) bildet.

18. Behälter (1) gemäß einem der Ansprüche 1 bis 9 mit einer dazwischenliegenden Schicht (61) aus einem Kunststoff, der keine Affinität zu dem Kunststoff des zylinderförmigen Abschnitts (5) aufweist, wobei der Kunststoffilm (3) aus einem Kunststoff besteht, der eine Affinität zu dem Kunststoff aufweist, aus dem der zylinderförmige Abschnitt (5) besteht, und der dazwischenliegende Film (61) an einem Teil des Kunststoffilms haftet, welcher dem Henkelbildungsabschnitt (8) entspricht.

19. Behälter (1) gemäß einem der Ansprüche 1 bis 9 mit einem dazwischenliegenden Film (61) aus einem Kunststoff, der keine Affinität zu dem Kunststoff aufweist, der den zylinderförmigen Abschnitt (5) bildet, und einer Haftschicht (10), die an dem zylinderförmigen Abschnitt (5) haften kann, wobei die Haftschicht (10) an der äußeren Oberfläche des Kunststoffilms (3) ausgebildet ist, und der dazwischenliegende Film (61) an dem Abschnitt des Kunststoffilms (3) haftet, der dem Henkelbildungsabschnitt (8) entspricht.

20. Behälter (1) gemäß einem der Ansprüche 1 bis 9, wobei der Kunststoffilm (3) an der gesamten inneren Oberfläche des zylinderförmigen Abschnitts (5) im Bereich des Henkelbildungsabschnitts (8) und des Einschnitts (6, 6') haftet und flüssigkeitsdicht abdeckt.

## Revendications

1. Récipient (1) comportant un film intérieur et comprenant au moins une poignée (7, 7'), cette ou ces poignée(s) (7, 7') étant formée(s) sur la surface latérale (5) du récipient au niveau d'une région (8) de formation des poignées et étant séparée(s) de la surface latérale (5) par une découpe (6, 6'), la poignée (7, 7') ou chacune d'elles étant formée entièrement et d'une seule pièce avec la surface latérale (5) et pouvant se soulever de la surface latérale (5) ; caractérisé en ce que le récipient comprend
. un fond (4) à partir de la périphérie de laquelle s'étend vers le haut la surface latérale (5) pour former le corps principal (2) du récipient ; et
. un film (3) en résine synthétique adhérant à la surface latérale (5), le film (3) en résine synthétique adhérant à et recouvrant de façon étanche aux liquides au moins une partie de la face interne de la surface latérale (5) correspondant à la région (8) de formation des poignées et à la découpe (6, 6').

2. Récipient (1) selon la revendication 1, caractérisé en ce qu'il comporte une mince ligne de pliage (11, 11') formée à la limite entre la ou chacune des poignée(s) (7, 7') et la surface latérale (5).

3. Récipient (1) selon la revendication 2, dans lequel la mince ligne de pliage (11, 11') est inclinée en direction d'un axe central de la surface latérale (5).

4. Récipient (1) selon la revendication 2, dans lequel la forme de la mince ligne de pliage (11, 11') est sensiblement en arc de cercle.

5. Récipient (1) selon la revendication 2, dans lequel la mince ligne de pliage (11, 11') est constituée de deux des côtés d'un triangle, dans lequel l'angle intérieur formé par ces deux côtés est un angle obtus.

6. Récipient (1) selon l'une quelconque des revendications précédentes, dans lequel le fond (4) et la surface latérale (5) sont entièrement moulées en une seule pièce afin de former le corps principal (2) du récipient.

7. Récipient (1) selon la revendication 6, dans lequel le film (3) en résine synthétique est un film cylindrique qui recouvre la face interne de la surface latérale (5), le film (3) en résine synthétique comprenant un fond et une face supérieure comportant une ouverture au niveau de la face supérieure.

8. Récipient (1) selon la revendication 6, dans lequel le film (3) en résine synthétique comprend un fond (3a) recouvrant la face interne du fond (4) du récipient et une surface latérale (3b) s'étendant à partir de la périphérie du fond (3a) du film afin de recouvrir la face interne de la surface latérale (5) du récipient.

9. Récipient (1) selon l'une quelconque des revendications précédentes, dans lequel un motif (51) est imprimé sur la périphérie du film (3) en résine synthétique, et dans lequel la surface latérale (5) est réalisée en une résine synthétique transparente.

10. Récipient (1) selon la revendication 9, dans lequel le film (3) en résine synthétique est constitué de plusieurs couches, ce film multi-couches comprenant au moins une couche externe et une couche interne et comportant en outre le motif (51) entre la couche externe et la couche interne.

11. Récipient (1) selon la revendication 10, dans lequel le film multi-couches comprend au moins trois couches et dans lequel le motif (51) est imprimé sur une couche intermédiaire du film constitué d'au moins trois couches.

12. Récipient (1) selon la revendication 10 ou la revendication 11, dans lequel la couche externe du film (3) en résine synthétique est réalisée en une résine synthétique ne possédant pas d'affinité avec la résine constituant la surface latérale (5), et dans lequel la couche externe du film comporte une couche adhésive (10) sauf sur une partie correspondant à la région (8) de formation des poignées de façon que la couche adhésive (10) puisse coller la couche externe du film contre la découpe (6, 6') de manière étanche aux liquides.

13. Récipient (1) selon la revendication 10 ou la revendication 11, comportant un agent de séparation appliqué sur une partie de la face externe du film correspondant à la région (8) de formation des poignées, dans lequel la couche externe du film (3) en résine synthétique est réalisée en une résine synthétique possédant une affinité avec la résine constituant la surface latérale (5).

14. Récipient (1) selon la revendication 10 ou la revendication 11, comportant un film d'interposition (61) réalisé en une résine synthétique ne possédant pas d'affinité avec la résine constituant la surface latérale (5), dans lequel la couche externe du film en résine synthétique est réalisé en une résine synthétique possédant une affinité avec la résine constituant la surface latérale (5), le film d'interposition (61) adhérant à une partie de la face externe du film correspondant à la région (8) de formation des poignées.

15. Récipient (1) selon la revendication 10 ou la revendication 11, comportant une couche adhésive (10) apte à adhérer à la surface latérale (5) et un film d'interposition (61) réalisé en une résine synthétique ne possédant pas d'affinité avec la résine constituant la surface latérale (5), dans lequel la couche adhésive (10) est formée sur la couche externe du film (3) en résine synthétique, et dans lequel le film d'interposition (61) adhère à une partie de la face externe du film correspondant à la région (8) de formation des poignées.

16. Récipient (1) selon l'une quelconque des revendications 1 à 9, dans lequel le film (3) en résine synthétique est réalisé en une résine synthétique ne possédant pas d'affinité avec la résine constituant la surface latérale (5), le film (3) en résine synthétique comportant une couche adhésive (10) sauf sur une partie du film (3) en résine synthétique correspondant à la région (8) de formation des poignées de manière que la couche adhésive (10) puisse coller le film (3) en résine synthétique contre la découpe (6, 6') de façon étanche aux liquides.

17. Récipient (1) selon l'une quelconque des revendications 1 à 9, comportant un agent de séparation appliqué sur une partie du film en résine synthétique correspondant à la région (8) de formation des poignées, dans lequel le film (3) en résine synthétique est réalisé en une résine synthétique possédant une affinité avec la résine constituant la surface latérale (5).

18. Récipient (1) selon l'une quelconque des revendications 1 à 9, comportant un film d'interposition (61) réalisé en une résine synthétique ne possédant pas d'affinité avec la résine constituant la surface latérale (5), dans lequel le film (3) en résine synthétique est réalisé en une résine synthétique possédant une affinité avec la résine constituant la surface latérale (5), le film d'interposition (61) adhérant à une partie du film en résine synthétique correspondant à la région (8) de formation des poignées.

19. Récipient (1) selon l'une quelconque des revendications 1 à 9, comportant un film d'interposition (61) réalisé en une résine synthétique ne possédant pas d'affinité avec la résine constituant la surface latérale (5) et une couche adhésive (10) apte à adhérer à la surface latérale (5), dans lequel la couche adhésive (10) est formée sur la face externe du film (3) en résine synthétique, et dans lequel le film d'interposition (61) adhère à une partie du film (3) en résine synthétique correspondant à la région (8) de formation des poignées.

20. Récipient (1) selon l'une quelconque des revendications 1 à 9, dans lequel le film (3) en résine synthétique adhère à et recouvre de façon étanche aux liquides la totalité de la face interne de la surface latérale (5) correspondant à la région (8) de formation des poignées et à la découpe (6, 6').
